# EUROPEAN PATENT APPLICATION

(11) **EP 4 245 605 A1**
(43) Date of publication of application: **20.09.2023**
(21) Application number: 23020076.8
(22) Date of filing: 14.02.2023
(51) Int. Cl.: B60P 1/00, B60P 1/64, B60P 7/08, B62B 5/00

(54) **ARRANGEMENT FOR TOWING CART INTO TRUNK**

(30) Priority: 18.03.2022 FI 20227039
(71) Applicant: Pickdelso Oy, 01300 Vantaa (FI)
(72) Inventor: Saviranta, Tapio, 01300, Vantaa (FI)

(57) **Abstract**

An invention relates to loading of a trunk, especially loading the trunk of a van or a trailer. The invention concerns an arrangement (100) for towing a cart (101) into a trunk (102), the trunk having a space for at least two carts. The arrangement comprises a winch (103), a rope (104) attached to the winch, a locking part (105) attached to the rope, a counterpart (106) for coupling the locking part to a cart head (107), and a slope (108) at an entry (109) to the trunk. The arrangement further comprises a string (110) attached to the locking part (105), an opening (111), and a bed (112) in the counterpart (106) such that the bed holds the locking part inside the counterpart during towing. After the towing, pulling of the string (110) results in that the locking part moves through the opening, drops from the bed, and thus detaches from the counterpart.

## Description

Area of technology: an invention relates to loading of a trunk, especially loading the trunk of a van or a trailer.

### Background of the technology

Most loading platforms are made for trucks and they may be inappropriate for loading vans or such trailers whose trunk floor locates essentially lower than in the trucks. Sometimes no loading platform is usable for loading vans or the trailers whose trunk floor locates lower than in the trucks. A tail lift is one option for loading trucks or vans.

For example, grocery goods are usually picked into plastic or carton boxes and the boxes are transported by vans to the customers. Missing of a loading platform, or another loading tool, may cause that a van trunk or a trailer trunk is loaded by lifting the boxes with hands one by one into trunk, and then the boxes are piled onto the trunk floor. A drawback of the prior art is that manual loading of the trunk takes a lot of time.

A similar drawback concerns pick-up trucks. US6524056 shows an apparatus for loading and unloading a motorcycle onto and from the bed of a pick-up truck. US5829945 shows a roll-out deck apparatus that is fitted to a pick-up truck and is intended for loading/unloading a snowmobile. US8084993 and US2021129607 describe various solutions for towing carts or race cars. Loading of a trunk differs from loading of a pick-up truck because the trunk is usually limited by three walls and a roof. Due to the walls and the roof/ceiling, releasing of a hook or a corresponsive locking part is a technical challenge when the towing is performed and the cart is located inside the trunk.

### Summary of the invention

An objective of the invention is to keep the goods to be delivered in carts and move the carts into the trunk of a van or a trailer. This practice saves time because the loading of the trunk can be performed in larger units compared to loading box-by-box.

Another objective of the invention is a low-cost tool for loading trunks, especially such trunks that are located less than one meter, or preferably about half meter above the ground, and such tool that does not increase much the weight of a van or a trailer.

Another objective of the invention is to use an electric winch to tow carts via a slope into the trunk. In one embodiment of the invention, the winch comprises a remote-controller and an employee can guide a cart onto the slope and simultaneously push with a finger the remote-controller button to tow the cart into the trunk. The technical challenge is detaching of the locking part when cart is located inside the trunk.

The invention concerns an arrangement for towing a cart into a trunk, the trunk having a space for at least two carts, the arrangement comprising
a winch,
a rope attached to the winch,
a locking part attached to the rope,
a counterpart for coupling the locking part to a cart head, and
a slope at an entry to the trunk.

The arrangement further comprises
a string attached to the locking part and
an opening and a bed in the counterpart such that the bed is able to hold the locking part inside the counterpart for the towing and pulling of the string after the towing results in that the locking part moves through the opening, drops from the bed, and thus detaches from the counterpart.

### Brief description of the drawings

For a more complete understanding of examples and embodiments of the present invention, reference is now made to accompanying drawings in which:
FIGURE 1 shows an arrangement for towing a cart into a trunk,
FIGURE 2 shows an example of a locking part and a counterpart,
FIGURE 3A shows a locking part detached from a cart,
FIGURE 3B shows two carts in a trunk,
FIGURE 4 shows a delivery trailer and a slope operating as a trunk door,
FIGURE 5 shows a slope that is a part of a towing apparatus,
FIGURE 6 shows towing a cart into a van trunk,
FIGURE 7A shows another example of a locking part and a counterpart,
FIGURE 7B shows an example of a locking part for two counterparts,
FIGURE 8 shows towing simultaneously a pair of carts into a trunk,
FIGURE 9A shows another embodiment for towing simultaneously a pair of carts,
FIGURE 9B shows arrangement in another delivery trailer example,
FIGURE 9C shows a trailer whose cargo is intended to be delivered by a driver,
FIGURE 10 shows multipurpose carts,
FIGURE 11 shows an example of a delivery vehicle.
FIGURE 12 shows towing a cart via a moveable slope into a trunk.

### Detailed description of the invention

It is appreciated that the following embodiments are exemplary. Although the specification may refer to "one" embodiment, the reference is not necessarily made to the same embodiment(s), or the feature in question may apply to multiple embodiments.

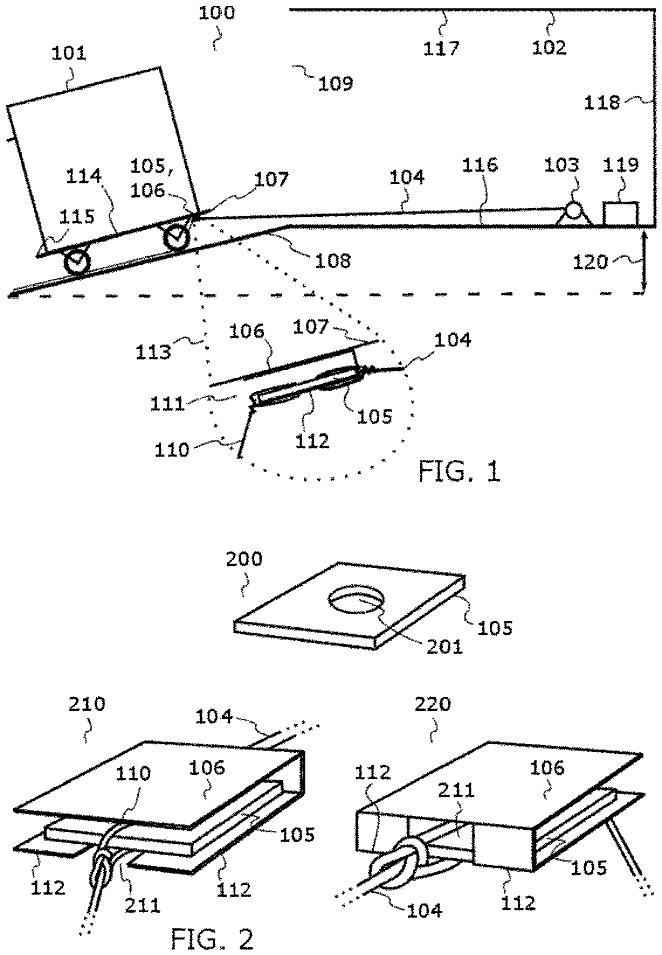

**FIGURE 1** shows an arrangement 100 for towing a cart 101 into a trunk 102 that has space for two similar carts. If the carts are intended for picking goods, they can be termed 'picking carts'. Arrangement 100 comprises a winch 103, a rope 104, and a locking part 105 attached to rope 104. Steel or synthetic materials, e.g. dyneema, are appropriate materials for rope 104. A counterpart 106 in a cart head 107 is intended for coupling locking part 105 to cart 101. The towing is going on in the figure and cart 101 is located on a slope 108 at an entry 109 to trunk 102.

Arrangement 100 further comprises a string 110 attached to locking part 105 as well as an opening 111 and a bed 112 in counterpart 106, as shown in a figure enlargement 113 inside a dashed line. Bed 112 holds locking part 105 inside counterpart 106. After the towing, pulling of string 110 results in that locking part 105 moves through opening 111. In other words, locking part 105 drops from bed 112 and detaches from counterpart 106.

Opening 111 in the counterpart 106 is located under a cart bottom 114 on a line between cart head 107 and a cart rear 115. Opening 111 enables placing locking part 105 inside counterpart 106 for the towing. Because of opening 111, locking part 105 is detachable from counterpart 106 by pulling string 110 towards cart rear 115.

Trunk 102 includes side walls but they are omitted from figure 1 to show details inside trunk 102. Winch 103 is mounted on a trunk floor 116 in this embodiment. Trunk floor 116, a ceiling 117, a back wall 118 opposite to entry 109, and the side walls (which are omitted) limit the space that is termed trunk 102.

Winch 103 gets electricity from a battery 119 which is placed on trunk floor 116. A distance 120 from trunk floor 116 to the ground is different in different models of vans, or trailers that can towed by vans. Distance 120 is usually about a half meter.

**FIGURE 2** shows an example of locking part 105 and counterpart 106 in three views 200, 210, and 220.

A first view 200 shows in which manner a washer can be used as locking part 105. The washer has a form of square and rope 104 is led through its hole, i.e. a locking part hole 201, and tied to locking part 105. Correspondingly, string 110 (for detaching locking part 105) is led through locking part hole 201 and tied to the washer.

In a second view 210, an employee has coupled locking part 105 to counterpart 106. The coupling is performed via an open side of counterpart 106, i.e. via opening 111. Locking part 105 rests now on bed 112 of counterpart 106. Counterpart 106 is made, for example, in the following manner. First a piece is cut from a steel sheet by laser and also a rope gap 211 is made by the laser. Then the piece is bended using a bending machine. The piece, i.e. counterpart 106, includes bed 112 for locking part 105 on the both sides of rope gab 211. In addition to rope 104, string 110 is partly located in rope gab 211.

In a third view 220, counterpart 106 is viewed from the opposite direction than in second view 210. Rope gab 211 has such measures that rope 104 can penetrate rope gab 211 and rope gab 211 is smaller than locking part 105. Therefore, counterpart 106 holds locking part 105 in position during the towing of a cart. Locking part 105 has in this example the shape of square but it may have basically any shape assuming that locking part 105 cannot penetrate rope gab 211.

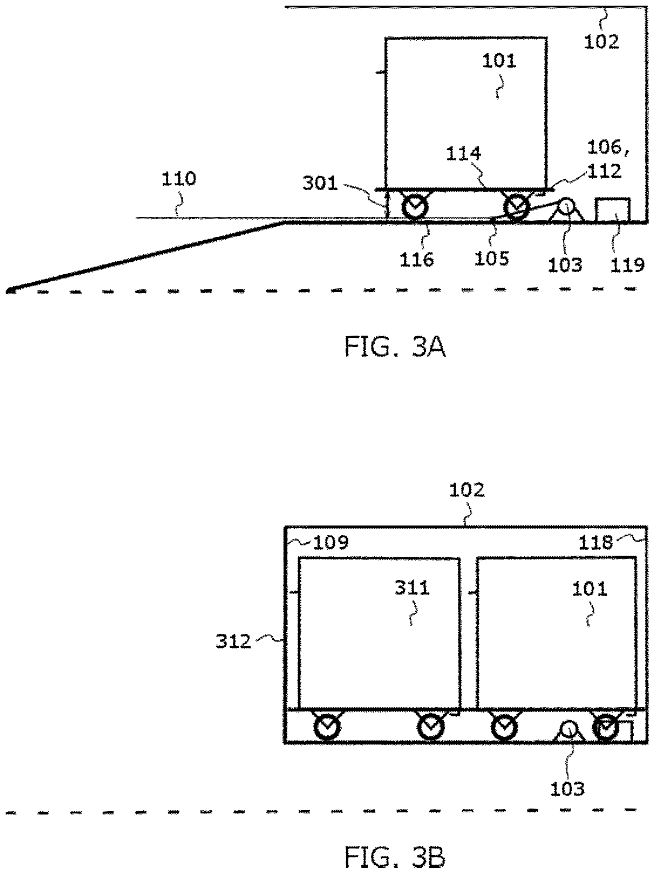

**FIGURE 3A** shows locking part 105 detached from cart 101. An employee has towed cart 101 into trunk 102 by using winch 103 (with the winch remote-controller). Then the employee has pulled string 110 resulting in that locking part 105 has dropped from bed 112 of counterpart 106. Now locking part 105 rests on trunk floor 116 and assuming that the employee continues pulling string 110, the locking part 105 will come out of trunk 102 after which it can be coupled to another cart.

In one embodiment the height of winch 103 and the height of battery 119 are smaller than a cart clearance 301. Therefore, cart 101 can be located above winch 103 and above battery 119 such that cart bottom 114 does not touch them.

**FIGURE 3B** shows two carts in trunk 102. The employee has towed a second cart 311 into trunk 102 by using winch 103 and second cart 311 has pushed cart 101 against back wall 118. A trunk door 312 is closed (by the employee) and therefore entry 109 to trunk 102 is closed and trunk 102 and its content are ready for transportation.

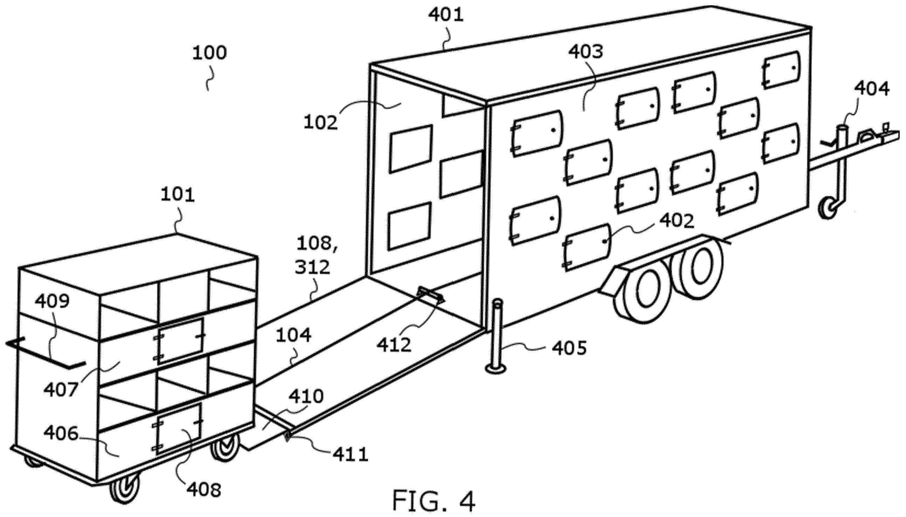

**FIGURE 4** shows an example of a trailer 401 and slope 108 that operates as trunk door 312 of trailer 401. Trailer 401 operates as a transportable locker system whose lockers open with correct PIN codes. Trailer 401 has twelve locker hatches on its both long sides, for example, a locker hatch 402 on a long side 403. A vertically movable front wheel 404, a vertically movable leg 405, and a similar leg on the opposite long side of trailer 401 support trunk 102 of trailer 401 during loading and unloading. Cart 101 to be loaded/towed into trunk 102 comprises lockers/repositories on four vertical levels such that on a first level 406 and on a third level 407 the lockers/repositories are thermally insulated and they include hatches, such as a hatch 408 on first level 406. Cart 101 comprises a handle 409 for moving cart 101 when picking grocery products or other products into cart 101 at a picking site. Handle 409 is further intended for guiding cart 101 into trunk 102 and pulling (empty) cart 101 out of trunk 102 when trailer 401 has been transported back to the picking site.

In one embodiment slope 108 is attached with at least one hinge to the under edge of trunk 102. This kind of slope 108 is also termed a "loading bridge". In one embodiment slope 108 comprises a hinged lip 410 that lengthens slope 108 and makes loading of trunk 102 easier.

After the loading, hinged lip 410 is turned against slope 108, i.e. against trunk door 312, such that it is located inside trunk 102 when trunk door 312 is closed. In one embodiment slope 108 comprises at least one elastic leg, such as an elastic leg 411, for protecting slope 108 against hits to the ground.

In one embodiment trunk arrangement 100 comprises a roller 412 at entry 109 to trunk 102. Roller 412 includes a groove to guide rope 104. When using a dyneema rope and slope 108 has a sleek and rounded edge, a roller at entry 109 is not necessary.

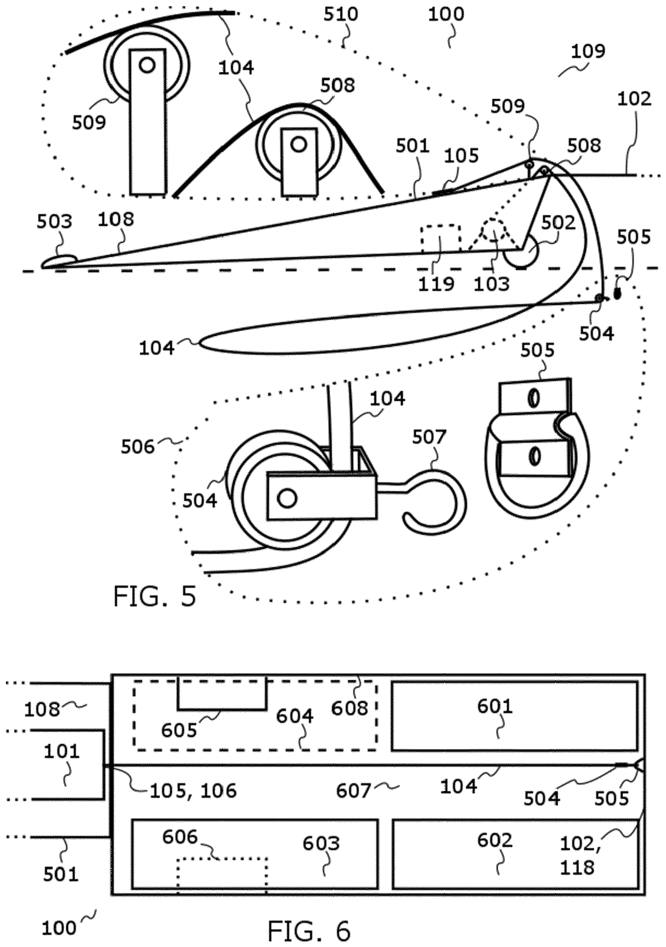

**FIGURE 5** shows slope 108 that is a part of an apparatus 501 intended for towing carts. Most towing components needed in arrangement 100 are included in apparatus 501 which is viewed in figure 5 from its side. Winch 103 is mounted to apparatus 501. Thus no winch is needed in a trunk, which is a benefit of this embodiment. Another benefit is that a single apparatus, i.e. apparatus 501, can be utilized in loading of several trunks.

Winch 103 and battery 119 are marked with dotted lines, because they are placed inside apparatus 501. A wheel 502 and a corresponding wheel on the opposite side of apparatus 501 make apparatus 501 movable. An employee can use a handle 503 and a corresponding handle on the opposite side of apparatus 501 when moving apparatus 501.

Arrangement 100 comprises in one embodiment a pulley 504 that is attachable to a loop 505 in trunk 102. Loop 505 is permanently attached to trunk 102 but the attaching point is not shown in figure 5. Assuming that pulley 504 is coupled to loop 505 in trunk 102, rope 104 runs from apparatus 501 into trunk 102 and via pulley 504 backwards from trunk 102. Locking part 105 (in the end of rope 104) rests currently on slope 108.

A figure enlargement 506 inside a dashed line shows details of pulley 504 and loop 505. Pulley 504 comprises a hook 507 for coupling pulley 504 to loop 505 in trunk 102. The employee puts hook 507 to loop 505 before towing carts.

In one embodiment, apparatus 501 comprise a rope guide 508 and an upper rope guide 509 that is located upon rope guide 508. Rope guide 508 is intended for guiding rope 104 at entry 109 towards trunk 102 and upper rope guide 509 is intended for guiding rope 104 backwards from trunk 102. In other words, rope 104 runs from rope guide 508 to pulley 504, which is coupled with hook 507 to loop 505 (in trunk 102), and rope 104 runs from pulley 504 to upper rope guide 509.

A pulley is an appropriate gadget to be used as rope guide 508 and/or upper rope guide 509 as illustrated in a figure enlargement 510. Alternatively, a roller can be used as rope guide 508 and/or upper rope guide 509.

**FIGURE 6** shows towing cart 101 into a trunk of a van by using apparatus 501. The van trunk is here trunk 102 and the view point is a bird's perspective. Carts 601-603 are already towed into trunk 102. In this example, trunk 102 is made for four carts, thus cart 101 will be the last of the four carts that can be simultaneously in trunk 102.

A dashed rectangle shows a spot 604 intended for cart 101. Cart 101 has enough clearance in order that it can be placed above a wheel arch 605. Cart 603 is located above another wheel arc 606. Carts 601-603 and cart 101 are implemented such that they have openings towards a corridor 607 on the middle of trunk 102. The van having trunk 102 is a delivery vehicle and a driver of that vehicle uses corridor 607 for collecting items from the carts. Those items are e.g. boxes including grocery products.

An employee using arrangement 100 has coupled pulley 504 to loop 505 on back wall 118 of trunk 102. In addition, before towing of cart 101 the employee has placed locking part 105 into counterpart 106. Loop 505 as well as apparatus 501 comprising slope 108 are intentionally attached closer to a side wall 608 of trunk 102 than the opposite side wall of trunk 102. Then pulley 504, which is coupled to loop 505, guides rope 104 such that cart 101 does not hit to cart 603 when cart 101 enters into trunk 102.

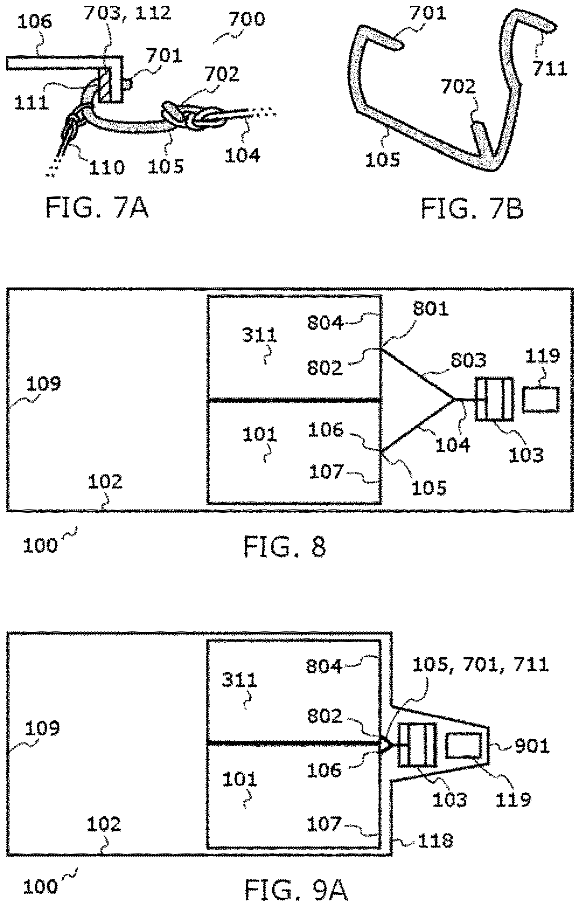

**FIGURE 7A** shows locking part 105 and counterpart 106, wherein they are viewed from side. Counterpart 106 is a hole-type 700 of counterpart, because it includes a hole for a straight end 701 of locking part 105. The hole operates as opening 111 through which locking part 105 is attachable to counterpart 106 and detachable from it.

Locking part 105 looks like a hook but its shape differs from a typical towing hook. Locking part 105 has straight end 701 so that it can be (easily) detached from counterpart 106 by pulling string 110. Locking part 105 further has a rope end 702 that is twisted toward straight end 701 in order to hold rope 104.

In one embodiment counterpart 106 comprises two layers such that one of the layers is a rubber layer 703 and the other layer is made of steel. The steel layer has an angle of 90° and it attaches counterpart 106 permanently to cart 101.

Rubber layer 703 surrounds opening 111 and the hole in rubber layer 703 operates as bed 112 on which locking part 105 rests due to the gravity.

**FIGURE 7B** shows locking part 105 for two counterparts of hole-type 700. Locking part 105 comprises straight end 701 for a counterpart and a second straight end 711 for a second counterpart. Locking part 105 having these two strait ends enables towing simultaneously two carts into a trunk. Rope end 702 of locking part 105 is intended for attaching a towing rope.

**FIGURE 8** shows from a bird's perspective towing simultaneously a pair of carts into trunk 102, wherein the pair is composed of cart 101 and second cart 311. The slope at trunk entry 109 is omitted from this figure. Trunk 102 is made for three pairs of carts, i.e. altogether six carts fit into trunk 102.

Arrangement 100 comprises a second locking part 801 and a second counterpart 802 for attaching second cart 311 to winch 103 to tow simultaneously cart 101 and second cart 311 into trunk 102. Counterpart 106 is permanently attached to the middle of cart head 107 and second counterpart 802 is permanently attached to the middle of a second cart head 804. Winch 103 and its battery 119 are mounted on trunk floor 116.

Locking part 105 in the end of rope 104 is coupled to counterpart 106. Second locking part 801 in an end of a second rope 803 is coupled to second counterpart 802. The opposite end of second rope 803 is permanently attached to rope 104 to enable simultaneous towing of cart 101 and second cart 311. Cart 101 and second cart 311 have both similar locking part 105 and counterpart 106 as shown in figure 2. Alternatively, cart 101 and second cart 311 and have both similar locking part 105 and counterpart 106 as in shown in figure 7A.

**FIGURE 9A** shows another embodiment for towing simultaneously a pair of carts into trunk 102. Trunk 102 is viewed from a bird's perspective and the slope at trunk entry 109 is omitted from this figure. In one embodiment of arrangement 100, winch 103 is placed outside of trunk 102 into a winch space 901. Winch 103 and battery 119 are located on the floor of winch space 901 whose high is about 30 cm.

Winch 103 is configured to tow cart 101 and second cart 311 with rope 104 into trunk 102 such that they touch back wall 118 with their buffers. Locking part 105 is intended to be coupled in the same time to counterpart 106 and second counterpart 802. In other words, locking part 105 is similar as in figure 7B.

Cart 101 and second cart 311 and have similar counterparts, i.e. hole-type 700 type of counterparts. Counterpart 106 is permanently attached to the left lower corner of cart head 107 and second counterpart 802 is permanently attached to the right lower corner of second cart head 804.

An employee has placed cart 101 and second cart 311 side by side and then the employee has coupled cart 101 and second cart 311 to locking part 105. In more detail, the employee has pushed the straight end of locking part 105 through opening 111 of counterpart 106 and simultaneously the second straight end of locking part 105 through a corresponding opening in second counterpart 802.

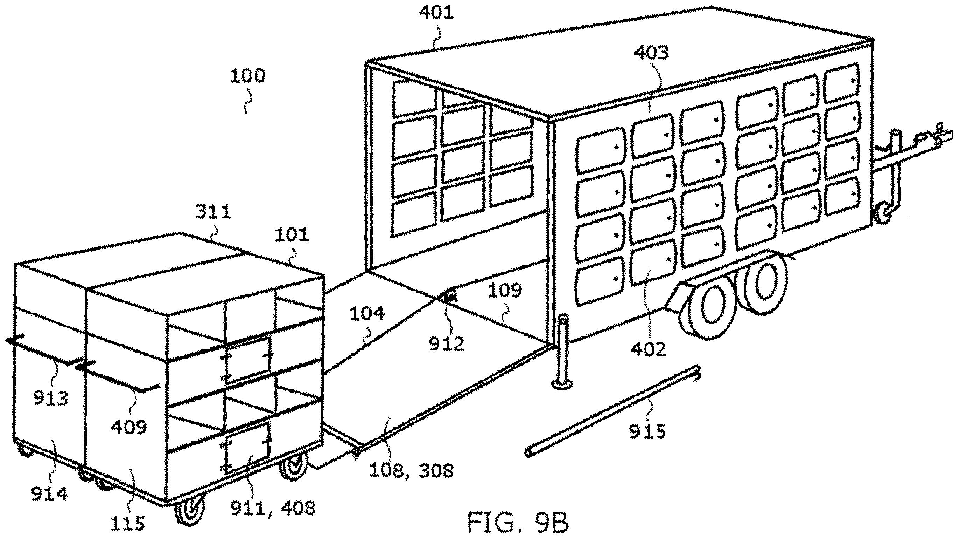

**FIGURE 9B** shows arrangement 100 in another trailer example. Trailer 401 is a transportable locker system comprising twenty four locker hatches on its both long sides, such as locker hatch 402 on long side 403. Conversely than in figure 4, here repositories open only one side of a cart. For example, a repository 911 that is located behind hatch 408 opens from the right side when cart 101 is viewed from cart rear 115. Later, when cart 101 is inside trunk 102, repository 911 is accessible through locker hatch 402.

Cart 101 and second cart 311 are coupled to locking part 105 shown in figure 7B. Slope 108 operates as trunk door 312. Instead of a roller, a pulley 912 is used at entry 109 to guide (towing) rope 104. Cart 101 comprises handle 409 for moving cart 101 and second cart 311 comprises a corresponsive handle 913 for moving second cart 311.

An employee can hold with one hand handle 409 and corresponsive handle 913 such that cart rear 115 and a second cart rear 914 cannot recede from each other when towing cart 101 and second cart 311 into trunk 102. When trailer 401 is transported back to the picking site the employee can use a boat hook 915 for pulling empty carts, one by one, out of trunk 102. The employee grips with boat hook 915, for example, to handle 409 to pull cart 101 out of trunk 102.

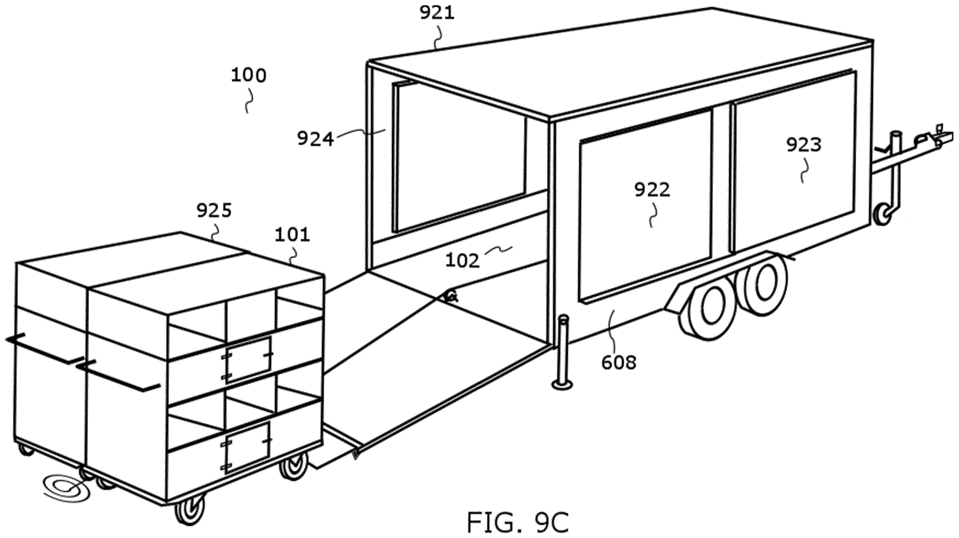

**FIGURE 9C** shows a trailer 921 whose cargo is to be delivered by a driver. The "cargo" means goods that are placed in a set of carts. The driver of a van or another type of road vehicle drives a predetermined delivery route, and delivers the goods to customers.

Trailer 921 has two large-sized sliding doors 922, 923 on side wall 608 of trunk 102, and two sliding doors on an opposite side wall 924. The sliding doors are lockable and openable by the driver who uses a (mechanical) key. Trailer 921 increases transportation capacity, for example, in a home delivery service.

Arrangement 100 works best when the carts, which are to be towed simultaneously into trunk 102, have the same size. Thus, cart 101 and cart 925 have the same length, height, and width. Cart 101 has twelve repositories for goods but cart 925 may, however, have less or more repositories.

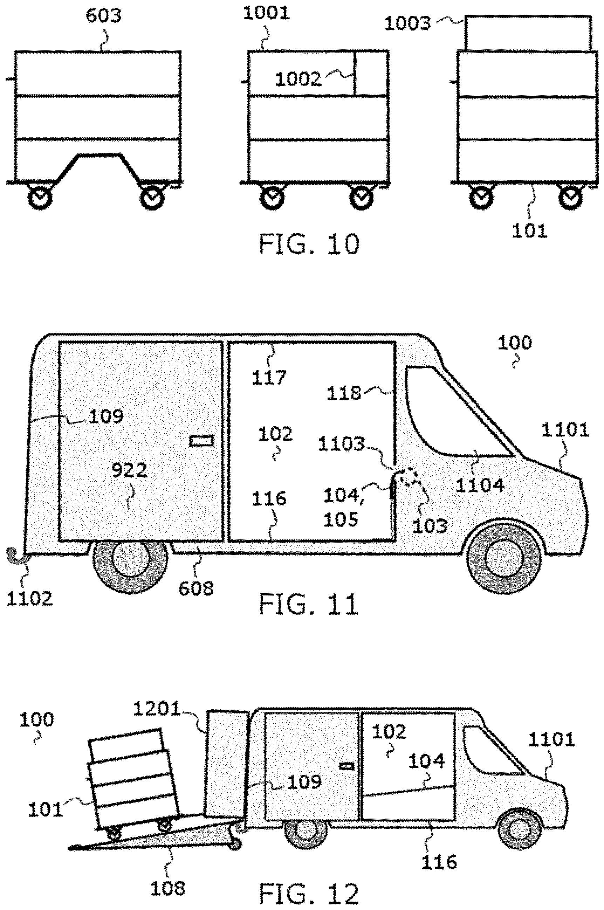

**FIGURE 10** shows an example of multipurpose carts designed for picking, storing, and transporting of goods. The carts are manually moveable and/or they are movable by forklifts and low level order pickers. Cart 603 has a high clearance because it is intended to be placed above a wheel arch of a delivery vehicle.

Cart 603 and cart 1001 are e.g. 140 cm high. Cart 1001 is shorter but wider than cart 603. Cart 1001 and cart 101 are both about 75 cm wide and 120 cm long. Cart 1001 and cart 101 almost touch each other when they are placed side by side into a trunk whose width is about 160 cm. Thus, they efficiently utilize the space in the trunk.

The carts are adjustable for different needs. For example, cart 1001 includes a detachable dividing wall 1002 to divide a shelf into two repositories and cart 101 includes a detachable upper part 1003. Detachable upper part 1003 provides an extra storage space for goods.

**FIGURE 11** shows an example of a delivery vehicle 1101 which is here a van but could be some other road vehicle. Trunk 102 is limited by trunk floor 116, ceiling 117, side wall 608, the opposite side wall between trunk floor 116 and ceiling 117, entry 109 for receiving carts, and back wall 118 opposite to entry 109. Back wall 118 is attached to trunk floor 116, ceiling 117, side wall 608, and the opposite side wall.

Delivery vehicle 1101 has sliding doors on the both sides, i.e. a sliding door 922 attached to side wall 608, and a corresponsive sliding door attached to the opposite side wall. The both sliding doors are opened in figure 11. Delivery vehicle 1101 has a trailer hitch 1102 thus it can tow, for example, trailer 401 or trailer 921, and delivery vehicle 1101 can simultaneously transport cargo in its own trunk.

In one embodiment winch 103 is mounted to the trunk 102, for example, to back wall 118. In another embodiment, arrangement 100 comprises an inlet 1103 for rope 104 because winch 103, to which rope 104 is coupled, is mounted outside of trunk 102.

Figure 11 shows an embodiment wherein winch 103 (marked with dashed lines) is mounted to a cabin 1104 besides a driver's seat. Therefore, inlet 1103 for rope 104 is placed at back wall 118. Inlet 1103 is so large that a driver can place via it locking part 105 and the string attached to locking part 105 from trunk 102 to the side of cabin 1104.

**FIGURE 12** shows towing a cart 101 in arrangement 100 into delivery vehicle 1101 having two back doors. A back door 1201 and its pair (behind back door 1201) are opened and slope 108 is in use. Slope 108 is a (manually) moveable tool that is intended to be placed at entry 109 of trunk 102. Slope 108 is a simplified version of the apparatus shown in figure 5 because a winch and an accumulator are omitted from it. Rope 104 is located so high that a pulley or a rope guide is not needed on trunk floor 116 of delivery vehicle 1101, or on slope 108, making walking thereon more safety.

Generally speaking, arrangement 100 is intended for loading trailer 401, 921, and delivery vehicle 1101. Trailer 401 is a transportable locker system that can be used, for example, in click & collect services, whereas trailer 921 and delivery vehicle 1101 are useful, for example, in home delivery services.

The invention is defined in the following claims.

## Claims

1. An arrangement (100) for towing a cart (101) into a trunk (102), the trunk having a space for at least two carts and the arrangement comprising
a winch (103),
a rope (104) attached to the winch,
a locking part (105) attached to the rope,
a counterpart (106) for coupling the locking part to a cart head (107), and
a slope (108) at an entry (109) to the trunk,
**characterized in that** the arrangement further comprises
a string (110) attached to the locking part (105) for detaching the locking part from the counterpart after the towing, pulling of the string resulting **in that** the locking part moves through an opening (111) arranged in the counterpart (106) and drops from a bed (112) that is able to hold the locking part inside the counterpart, and thus enables pulling of the locking part out of the trunk.

2. The arrangement as claimed in claim 1, **characterized in that** the opening (111) in the counterpart (106) is placed under a cart bottom (114) on a line between the cart head (107) and a cart rear (115).

3. The arrangement as claimed in claim 1, **characterized in that** the winch (103) is mounted to the trunk (102).

4. The arrangement as claimed in claim 3, **characterized in that** the winch (103) is mounted on a trunk floor (116) and a height of the winch (103) measured from the trunk floor is smaller than a cart clearance (301).

5. The arrangement as claimed in claim 1, **characterized in that** the slope (108) is attached with at least one hinge to an under edge of the trunk (102) and the slope operates as a trunk door (312).

6. The arrangement as claimed in claim 1, **characterized in that** the slope (108) is a moveable tool and intended to be placed at the entry (109) of the trunk (102).

7. The arrangement as claimed in claim 6, **characterized in that** the winch (103) is mounted to an apparatus (501) that comprises the slope (108).

8. The arrangement as claimed in claim 7, **characterized in that** the apparatus (501) to be used in the arrangement further comprises a pulley (504) and said pulley is attachable to the trunk (102) to guide the rope (104) therein.

9. The arrangement as claimed in claim 7, **characterized in that** the apparatus (501) to be used in the arrangement further comprises an upper rope guide (509) intended for guiding the rope (104) backwards from the trunk (102).

10. The arrangement as claimed in claim 1, **characterized in that** the arrangement further comprises a second counterpart (802) for a second cart (311) to tow simultaneously the cart and the second cart into the trunk (102).

11. The arrangement as claimed in claim 10, **characterized in that** the arrangement further comprises
a second locking part (801) to be coupled to the second counterpart (802) and
a second rope (803) to attach the second locking part to the rope (104).

12. The arrangement as claimed in claim 10, **characterized in that** the locking part (105) comprises a straight end (701) for the counterpart (106) and a second straight end (711) for the second counterpart (802), and the counterpart and the second counterpart are of hole-type (700).

13. The arrangement as claimed in claim 1, **characterized in that** the arrangement comprises for the rope (104) an inlet (1103) into the trunk (102).

14. The arrangement as claimed in claim 13, **characterized in that** the inlet (1103) for the rope (104) is placed at a back wall (118) of the trunk (102).

15. The arrangement as claimed in claim 14, **characterized in that** the winch (103) is mounted to a cabin (1104) of a delivery vehicle.
